# EUROPEAN PATENT SPECIFICATION

(11) **EP 1 611 058 B1**
(45) Date of publication and mention of the grant of the patent: **05.12.2007**
(21) Application number: 03816513.0
(22) Date of filing: 31.03.2003
(51) Int. Cl.: C01G 23/00

(54) **METHOD FOR SYNTHESIS OF GEIKIELITE**
SYNTHESEVERFAHREN FÜR GEIKIELITH
PROCEDE DE SYNTHESE DE GEIKIELITE

(43) Date of publication of application: 04.01.2006
(73) Proprietor: Council of Scientific and Industrial Research, New Delhi 110 001, Maharashtra (IN)
(72) Inventor: PARTHASARATHY, G. Nat. Geophysical Research Inst., Andhra Pradesh (IN); MANORAMA, S.V. Indian Inst. of Chemical Technology, Andhra Pradesh (IN)
(74) Representative: Smyth, Gyles Darren
(86) International application number: PCT/IN2003/000098
(87) International publication number: WO 2004/087576

(56) References cited:
- DATABASE CA [Online] CHEMICAL ABSTRACTS SERVICE, COLUMBUS, OHIO, US; BAURA-PENA, M. P. ET AL: "Synthesis of the mineral geikielite MgTiO3" retrieved from STN Database accession no. 115:164866 CA XP002268174 & JOURNAL OF MATERIALS SCIENCE (1991), 26(16), 4341-3 ,
- DATABASE CA [Online] CHEMICAL ABSTRACTS SERVICE, COLUMBUS, OHIO, US; ZABICKY, JACOB ET AL: "Metastable magnesium titanate phases synthesized in nanometric systems" retrieved from STN Database accession no. 127:321910 CA XP002268175 & PHILOSOPHICAL MAGAZINE B: PHYSICS OF CONDENSED MATTER: STATISTICAL MECHANICS, ELECTRONIC, OPTICAL AND MAGNETIC PROPERTIES (1997), 76(4), 605-614 ,
- DATABASE CA [Online] CHEMICAL ABSTRACTS SERVICE, COLUMBUS, OHIO, US; LEE, JAICHAN ET AL: "Sol-Gel derived epitaxial MgTiO3 thin films" retrieved from STN Database accession no. 131:188424 CA XP002268176 & JAPANESE JOURNAL OF APPLIED PHYSICS, PART 1: REGULAR PAPERS, SHORT NOTES REVIEW PAPERS (1999), 38(6A), 3651-3654 ,
- DATABASE CA [Online] CHEMICAL ABSTRACTS SERVICE, COLUMBUS, OHIO, US; ZABICKY, J. ET AL: "Properties of nanostructured magnesium metatitanate prepared by the sol-gel technique" retrieved from STN Database accession no. 125:149089 CA XP002268177 & NANOSTRUCTURED MATERIALS (1996), 7(5), 527-533 ,

## Description

The present invention relates to a method for the synthesis of geikielite, a mantle oxide by thermal decomposition of hydrous magnesium nitrate and titanium hydroxide. The method of the invention is simple and economical.

### Background of the invention

Geikielite, MgTiO₃, is the magnesium analog of ilmenite and typically occurs in solid solutions with other oxides like ilmenite (FeTiO₃) pyrophanite (MnTiO₃), and hematite (Fe₂O₃) in the Mg-rich mantle (200- 670 km depth of Earth's deep interior) rocks such as kimberlites, carbonatites. It is very rare to get a pure geikielite in nature.

Reference is made to Sheikh and Irvine (1993) J.Solid State Chemistry wherein the synthetic samples of magnesium titanates show wide variety of structures like spinel, ilmenite, perovskite, etc, The drawbacks are the requirement of very high-temperature for synthesis of these spinel system 1400°C, and the observed inhomogeneous nature of the prepared sample.

Reference is made to Cogle et al. J. Materials Research, v1, 289-291, wherein the sample preparation method is disclosed for the MgTiO₄-MgTi₂O₄ spinel system for possible high-temperature super conducting behavior at about 30°KELVIN. The drawback is that the sample contained only traces of geikielite.

Reference is made to Yukio US patent US 4226735 (1980), wherein a method is disclosed for preparation of a dielectric ceramic containing MgTiO₃ and Pb₃O₄, where they could obtain the dielectric with maximum concentration of MgTiO₃ of only 32 mol per cent.

Reference is also made to Shibasaki et al (1999) US 5,968,248, wherein a method is disclosed about the synthesis of heat-resistant pigment, where the titanium oxide is mixed with two different divalent metal ( Fe, Ni, Co) oxides having the ratios of 95 to 5 atomic %. This method although describes the practical application of composite oxide system Fe-Ni-Co-Mg-TiO₃, It did not discuss about the preparation method of pure MgTiO₃.

### Objects of the invention

The main object of the present invention is to provide an improved methodology for synthesizing geikielite, a mantle oxide (which occurs in the Earth's deep interior) by thermal decomposition of hydrous magnesium nitrate and titanium hydroxide.

Another object of the invention is to prepare geikielite using magnesium nitrate Mg(NO₃)₂.6H₂O (Aldrich Chemical Co).

Another object of the invention is to provide a simple and economical method for the synthesis of geikielite, an important mantle oxide mineral.

Another object of the invention is to provide is to provide a method for the synthesis of pure form of geikielite in larger quantities.

It is another object of the invention to provide a method for the synthesis of geikeilite which is economical and environmentally friendly.

### Summary of the invention

Accordingly the present invention provides a method for the synthesis of geikielite (Mg TiO₃) a mantle oxide, which comprises thermally decomposing a mixture of hydrous magnesium nitrate and titanium hydroxide.

In one embodiment of the invention, the thermal decomposition is carried out at a temperature in the range of 670°C to 770°C.

In another embodiment of the invention, the thermal decomposition is carried out for a period of at least 8 hours.

In another embodiment of the invention, titanium hydroxide is obtained by conversion of TiCl₄.

In another embodiment of the invention, the magnesium nitrate and titanium hydroxide are mixed in equimolar ratio.

In another embodiment of the invention, the mixing of magnesium nitrate and titanium hydroxide is carried out in an ethanolic medium to obtain a homogeneous mixture.

In yet another embodiment of the invention, the thermal decomposition proceeds by co-precipitation.

In a further embodiment of the invention, the geikeilite is obtained in the form of a powder having a particle size in the range of 10 to 20 microns.

### Detailed description of the invention

The novelty of the present invention lies in the use of synthetic Ti(OH)₄ and commercially available magnesium nitrate Mg(NO₃)₂.6H₂O (Aldrich Chemical Co) to synthesis geikielite (Mg TiO₃ a mantle oxide. The temperature of synthesis is in the range of 670 to 770°C, preferably about 720°C and is carried out for at least 8 hours. Ti (OH)₄ is synthesised by converting Ti (Cl)₄ into Ti (OH)₄.

The product is obtained in the form a powder having a particle size of about 10 to 20 microns. Geikielite- Mg TiO₃ a titanate mantle mineral was been prepared by a simple and novel method. The sample was characterized by powder x-ray diffraction, Fourier transform infrared spectroscopic methods. The proposed method is found to be less expensive than the expenses involved in purification of naturally occurring samples to obtain pure geikielite from geological samples.

### Scientific Explanation:

The present invention comprises a method for the synthesis of geikeilite (MgTi O₃) a mantle oxide, which usually occurs with the association with other mineral oxides at the depth of 200-670 km in the Earth's deep interior using synthetic Ti(OH)₄ and commercially available magnesium nitrate Mg (NO₃)₂.6H₂O (Aldrich Chemical Co). Understanding the thermodynamic properties like phase stability under high-pressure and high-temperature of this oxide help in better understanding about origin of kimberlites and other deep seated minerals like diamond. The present study of formation of pure geikielite at room pressure is useful in understanding physics of Earth's deep interior. The geikielite is formed by co precipitation method as shown below:

Ti(OH)₄ + Mg (NO₃)₂.6 H₂O **→** MgTiO₃+ NH₄NO₃ + H₂O

The above reaction was carried out at a temperature of 720°C over 8 hours. The ammonium salts were dissolved in double distilled water.

The following examples are given by way of illustration of the present invention and therefore should not be construed to limit the scope of the invention

### Example 1: Preparation and characterization of Ti(OH)₄:

Titanium hydroxide was prepared by taking 0.1 M TiCl₄ in deionized water. NH₃ solution was added slowly (at PH=7). Under this condition TiCl₄ converts into Ti (OH)₄. The mixtures were washed until all the chlorine was totally removed. The presence of any residual chlorine was detected by treatment of the product with silver nitrate solution.

### Example 2: Preparation and characterization of Geikielite:

Geikielite (MgTiO₃) powder was prepared by the thermal decomposition of synthetic Ti(OH)₄ (as mentioned in Example 1) and commercially available magnesium nitrate Mg(NO₃)₂.6H₂O (Aldrich Chemical Co) at a temperature of 720°C over 8 hours. The precipitate of Ti(OH)₄ was filtered, washed and dried overnight at 100°C in an oven. Magnesium nitrate and titanium hydroxide were mixed in equimolar ratio in ethanol medium and ground together for about 30 minutes to make a homogeneous mixture. This mixture was calcined at 720°C over 8 hours. The formation of geikielite with ilmenite structure was then confirmed by SEM, XRD, and FTIR spectroscopic methods.

The chemical composition of the geikielite was determined by Electron microprobe microanalysis, X-ray fluorescence and Hitachi S-520 Scanning Electron microscopy in EDAX mode. The composition of the prepared sample was found to be MgO = 33.58 to 33.55 and TiO₂= 66.43 to 66.46 wt % indicating the presence of pure geikielite phase.

### Example 3: X-ray diffraction studies:

For powder-XRD studies, the ground sample was spread over a low-background quartz plate and scanned over interplanar spacing 0.13 to 0.5nm range. Eleven well-resolved Bragg reflections were observed and indexed to a hexagonal unit cell with a= 0.506 nm and c= 1.39 nm. The reflections are given below:

| D (nm) | (hkl) | Relative Intensity |
|---|---|---|
| 0.4642 | 003 | 30 |
| 0.4184 | 101 | 28 |
| 0.3703 | 012 | 40 |
| 0.2723 | 104 | 100 |
| 0.2528 | 110 | 60 |
| 0.2219 | 113 | 70 |
| 0.2091 | 202 | 10 |
| 0.1352 | 024 | 40 |
| 0.1710 | 116 | 60 |
| 0.1494 | 214 | 30 |
| 0.1460 | 300 | 38 |

### Example 4: Infrared Spectroscopic Studies:

Fourier-transform infrared spectroscopic studies on the geikielite sample show eight distinct vibrational modes corresponding to octahedral vibrations, which are characteristic of oxides with ilmenite-type structure. The observed bands are 350, 378, 422, 484, 556, 624, 670, and 725 cm⁻¹. There are no bands at 3400-3600 cm⁻¹, indicating anhydrous nature of the geikielite.

### The Main advantages of the present invention are

1. A simpler method for synthesizing geikielite, an important mantle oxide mineral.
2. It can be used for dielectric ceramic industries.
3. This method is useful in preparing pure form of geikielite in larger quantities.
4. Work-up procedure is very simple.
5. The present method does not involve any expensive high-pressure instrumentation to synthesis the mantle oxide.
6. This method does not use any expensive chemical and hence economical.
7. The present method is environmentally safe.

## Claims

1. A method for the synthesis of geikielite (Mg TiO₃) a mantle oxide, which comprises thermally decomposing a mixture of hydrous magnesium nitrate and titanium hydroxide.

2. A method as claimed in claim 1 wherein the thermal decomposition is carried out at a temperature in the range of 670°C to 770°C.

3. A method as claimed in claim 1 wherein the thermal decomposition is carried out for a period of at least 8 hours.

4. A method as claimed in claim 1 wherein the titanium hydroxide is obtained by conversion of TiCl₄.

5. A method as claimed in claim 1 wherein the magnesium nitrate and titanium hydroxide are mixed in equimolar ratio.

6. A method as claimed in claim 1 wherein the mixing of magnesium nitrate and titanium hydroxide is carried out in an ethanolic medium to obtain a homogeneous mixture.

7. A method as claimed in claim 1 wherein the thermal decomposition proceeds by co-precipitation.

8. A method as claimed in claim 1 wherein the geikeilite is obtained in the form of a powder having a particle size in the range of 10 to 20 microns.

## Patentansprüche

1. Verfahren zur Synthese von Geikielith (MgTiO₃), einem im Erdmantel vorkommenden Oxid, wobei das Verfahren die thermische Zersetzung eines Gemischs aus hydratisiertem Magnesiumnitrat und Titan-hydroxid aufweist.

2. Verfahren nach Anspruch 1, wobei die thermische Zersetzung bei einer Temperatur von 670°C bis 770°C durchgeführt wird.

3. Verfahren nach Anspruch 1, wobei die thermische Zersetzung während einer Zeitspanne von mindestens 8 Stunden durchgeführt wird.

4. Verfahren nach Anspruch 1, wobei das Titan-hydroxid durch Umwandlung von TiCl₄ gewonnen wird.

5. Verfahren nach Anspruch 1, wobei das Magnesiumnitrat und Titan-hydroxid in äquimolarem Verhältnis vermischt werden.

6. Verfahren nach Anspruch 1, wobei das Vermischen von Magnesiumnitrat und Titan-hydroxid in einem ethanolischen Medium ausgeführt wird, um ein homogenes Gemisch zu erhalten.

7. Verfahren nach Anspruch 1, wobei die thermische Zersetzung durch gemeinsame Fällung vor sich geht.

8. Verfahren nach Anspruch 1, wobei der Geikielith in Form eines Pulvers mit einer Teilchengröße im Bereich von 10 bis 20 µm gewonnen wird.

## Revendications

1. Procédé de synthèse de geikielite (Mg TiO₃), un oxyde du manteau terrestre, qui comprend la décomposition thermique d'un mélange de nitrate de magnésium hydraté et d'hydroxyde de titane.

2. Procédé conforme à la revendication 1 dans lequel la décomposition thermique est réalisée à une température dans la gamme de 670°C à 770°C.

3. Procédé conforme à la revendication 1 dans lequel la décomposition thermique est réalisée sur une durée d'au moins 8 heures.

4. Procédé conforme à la revendication 1 dans lequel l'hydroxyde de titane est obtenu par transformation de TiCl₄.

5. Procédé conforme à la revendication 1 dans lequel le nitrate de magnésium et l'hydroxyde de titane sont mélangés sous un rapport équimolaire.

6. Procédé conforme à la revendication 1 dans lequel le mélange de nitrate de magnésium et d'hydroxyde de titane est réalisé en milieu éthanolique afin d'obtenir un mélange homogène.

7. Procédé conforme à la revendication 1 dans lequel la décomposition thermique a lieu par co-précipitation.

8. Procédé conforme à la revendication 1 dans lequel le geikielite est obtenu sous forme de poudre présentant une taille de particule dans la gamme de 10 à 20 microns.
